# EUROPÄISCHE PATENTSCHRIFT

(11) **EP 2 845 026 B1**
(45) Veröffentlichungstag und Bekanntmachung des Hinweises auf die Patenterteilung: **15.06.2016**
(21) Anmeldenummer: 13734047.7
(22) Anmeldetag: 02.07.2013
(51) Int. Cl.: G01S 3/48, G01S 5/02, G01S 13/02, G01S 13/75, G01S 13/82

(54) **VERFAHREN UND ANORDNUNG ZUR RELATIVEN LAGEERKENNUNG VON STATIONEN MITTELS FUNKORTUNG**
METHOD AND ARRANGEMENT FOR THE RELATIVE POSITION DETECTION OF STATIONS BY MEANS OF RADIO LOCATION
PROCÉDÉ ET ENSEMBLE POUR LA DÉTECTION RELATIVE DE POSITION DE STATIONS PAR RADIOLOCALISATION

(30) Priorität: 06.07.2012 DE 102012211809
(43) Veröffentlichungstag der Anmeldung: 11.03.2015
(73) Patentinhaber: Siemens Aktiengesellschaft, 80333 München (DE)
(72) Erfinder: HÜTTNER, Jörg, 95028 Hof (DE); ZIROFF, Andreas, 80469 München (DE)
(86) Internationale Anmeldenummer: PCT/EP2013/063879
(87) Internationale Veröffentlichungsnummer: WO 2014/006013

(56) Entgegenhaltungen:
- EP-A2- 0 567 888
- WO-A1-2009/086212
- WO-A1-2010/009906
- WO-A1-2011/047899
- WO-A1-2012/012901
- WO-A1-2013/050597
- US-A1- 2008 238 686
- US-A1- 2009 002 165
- US-A1- 2011 074 633
- RASMUS KRIGSLUND ET AL: "Potential of RFID Systems to Detect Object Orientation", ICC 2011 - 2011 IEEE INTERNATIONAL CONFERENCE ON COMMUNICATIONS - 5-9 JUNE 2011 - KYOTO, JAPAN, IEEE, PISCATAWAY, NJ, USA, 5. Juni 2011 (2011-06-05), Seiten 1-5, XP031909146, DOI: 10.1109/ICC.2011.5963421 ISBN: 978-1-61284-232-5

## Beschreibung

Die vorliegende Erfindung betrifft ein Verfahren und eine Anordnung zur Ermittlung der relativen Lage von mindestens zwei Stationen mittels Funkortung.

Lokale Funkortungssysteme zur Positionsbestimmung eines oder mehrerer mobiler Funkmodule finden heute vielfache Anwendung. Verfahren mittels Radiowellen zeichnen sich durch die Eigenschaften wie Robustheit, Genauigkeit und Unempfindlichkeit gegenüber Stör- und Umwelteinflüssen aus.

Ein Beispiel für die Anwendung eines derartigen Funkortungssystems ist die Automobilindustrie. Dort ist es beispielsweise mit Blick auf die zunehmende Bedeutung der Elektromobilität notwendig, dass Elektrofahrzeuge selbsttätig fahren und mit hoher Präzision einparken können. Erforderlich ist dies beispielsweise beim induktiven Laden derartiger Elektrofahrzeuge, bei dem eine hohe Einparkgenauigkeit gefordert ist, um die entsprechenden Ladespulen von Ladesäule und Elektrofahrzeug genau zueinander auszurichten.

Dabei ist nicht nur die Messung der Abstände zwischen zwei mit Funkmodulen ausgestatteten Objekten, wie beispielsweise Elektrofahrzeug und Ladesäule, erforderlich, sondern auch die Bestimmung der Winkellage zueinander. So muss messtechnisch die geometrische vollständige Relativlage bezüglich Entfernung und Winkel erfasst werden. Nur dann kann eine Regelung die Navigation eines Fahrzeuges übernehmen. Dies ist auch bekannt als "elektronische Deichsel".

Weitere Anwendungsmöglichkeiten ergeben sich zum Beispiel im Bereich der Verladung von Schüttgütern, beispielsweise im Tagebau oder in der Landwirtschaft.

Herkömmliche Funkortungssysteme können eine Positionsinformation einer mobilen Einheit aus verschiedenen messbaren Größen der Wellenausbreitung zwischen der mobilen Einheit und Basisstationen gewinnen. Diese Größen können beispielsweise die Empfangsfeldstärke, Laufzeit, Laufzeitdifferenzen oder Winkelinformation des an einer Basisstation ankommenden Signals sein. Die notwendigen Funkmodule in der mobilen Einheit und in den Basisstationen sind dabei jedoch technisch komplex und somit teuer.

Das Dokument EP 0 567 888 A2 zeigt ein Kommunikationssystem zur Datenübertragung von einem bewegten Fahrzeug auf eine ortsfeste Bake, die eine Sende- und Empfangseinrichtung aufweist. Dabei wird ein Signal von der Bake abgestrahlt und von einer Antenne eines Bordgeräts des Fahrzeugs empfangen und nach einer Modulation mit einem Datensignal wieder zur Bake zurückgesandt, wo die Daten aus dem zurückgesandten Signal extrahiert werden. Das Bordgerät weist wenigstens zwei Modulatoren auf, mit denen unabhängig voneinander das empfangene Signal mit dem Datensignal modulierbar und in unterschiedlicher Weise zurücksendbar ist.

Es ist eine Aufgabe der vorliegenden Erfindung, ein verbessertes Verfahren und eine verbesserte Anordnung zur relativen Lageerkennung von Stationen mittels Funkortung zu schaffen.

Demgemäß wird ein Verfahren zur Ermittlung der relativen Lage von Stationen mittels Funkortung vorgeschlagen. Eine Station ist dabei als Vorrichtung mit mindestens einer Antenne ausgestaltet. Mindestens eine erste Station weist mindestens eine erste Antenne auf, und mindestens eine zweite Station weist mindestens zwei fußpunktmodulierte Antennen auf. Die erste Station sendet mindestens ein Ortungssignal über die erste Antenne. Die zweite Station reflektiert das Ortungssignal über eine erste fußpunktmodulierte Antenne als ein erstes moduliertes reflektiertes Ortungssignal und über eine zweite fußpunktmodulierte Antenne als ein zweites moduliertes reflektiertes Ortungssignal. Die erste Station empfängt die modulierten reflektierten Ortungssignale über die Antenne. Aus den Phasenbeziehungen der empfangenen modulierten reflektierten Ortungssignale wird mindestens ein Lagewinkel für die relative Lage zwischen der ersten Station und der zweiten Station ermittelt.

Eine fußpunktmodulierte Antenne ist eine Antenne, die an ihrem Fußpunkt einen Modulator zur Modulation eines empfangenen Signals aufweist. Aus den Phasenbeziehungen der gesendeten und empfangenen Signale zueinander lassen sich die Peilungswinkel oder Lagewinkel α , β der Funkortungsstationen errechnen.

Das vorgeschlagene Verfahren erlaubt es, die notwendige Hardware und Algorithmik zur Erzeugung, Übertragung und Auswertung des Ortungssignals und des modulierten reflektierten Ortungssignals vorteilhaft in der ersten Station und somit nur in einer der beiden Stationen zu konzentrieren. Die zweite Station mit fußpunktmodulierten Antennen ist im Vergleich zu einer aktiven Sende- und Empfangsantenne sehr einfach aufgebaut und besonders kostengünstig herzustellen. Eine Anwendung wie beispielsweise die exakte Ansteuerung von Ladestationen durch Elektrofahrzeuge wird somit sehr kostengünstig auch in großen Stückzahlen möglich, da die aufwändige Hardware und Algorithmik nur in der Ladestation vorhanden sein muss, während die Elektrofahrzeuge lediglich mit den kostengünstigen, passiven Stationen mit fußpunktmodulierten Antennen ausgestattet sein müssen.

Bei Ausführungsformen des Verfahrens reflektieren die fußpunktmodulierten Antennen unterschiedliche Modulationen des Ortungssignals.

Dies ermöglicht eine relativ einfache Trennung der an der ersten Station empfangenen modulierten reflektierten Ortungssignale und ermöglicht somit die Gewinnung von Informationen über Entfernung und Laufzeitphase bezüglich der zweiten Station auch im Fall von gleichzeitig von den fußpunktmodulierten Antennen der zweiten Station modulierten reflektierten Ortungssignalen.

Bei weiteren Ausführungsformen des Verfahrens weist die erste Station eine zweite Antenne auf. Die erste Station sendet das Ortungssignal über die erste und über die zweite Antenne mit unterschiedlichen Frequenzen oder mit unterschiedlichen Modulationen, insbesondere mit orthogonalen Signalen.

Dies ermöglicht eine Trennung der an der ersten Station empfangenen modulierten reflektierten Ortungssignale nach Frequenzen beziehungsweise Sendekanälen oder Modulationen und ermöglicht insbesondere auch die Verwendung von weiteren ersten Stationen zur Sendung des Ortungssignals auf unterschiedlichen, trennbaren Kanälen. Die Verwendung orthogonaler Modulationen auf Seiten der ersten Station ist dabei besonders vorteilhaft, weil auch die modulierten reflektierten Ortungssignale dann besonders gut zu trennen sind. Orthogonal moduliert bezieht sich dabei auf das Verhältnis eines gesendeten Ortungssignals zu anderen gesendeten Ortungssignalen.

Bei weiteren Ausführungsformen des Verfahrens ist die zweite Station als ein Backscatter-Modul zur modulierten Rückstreuung des Ortungssignals ausgestaltet.

Dabei wird durch Impedanzänderungen an den fußpunktmodulierten Antennen der zweiten Station ein Rückstreueffekt für einen Teil der ankommenden elektromagnetischen Welle verursacht. Wird die Impedanzänderung beispielsweise durch einen Schalter ein- und ausgeschaltet, entsteht ein amplitudenmoduliertes Signal, das von der Antenne der ersten Station aufgenommen werden kann. Dadurch muss die zweite Station selbst keine eigene Sendeleistung aufwenden. Derartige Backscatter-Module erlauben Reichweiten bis zu 100 Metern.

Bei weiteren Ausführungsformen des Verfahrens ist die zweite Station als ein passiver RFID-Transponder ausgestaltet.

RFID-Transponder oder RFID-Tags sind sehr kostengünstig in großer Stückzahl verfügbar.

Bei weiteren Ausführungsformen des Verfahrens werden die fußpunktmodulierten Antennen der mindestens einen zweiten Station in einer Linie mit konstantem Abstand angeordnet.

Bei weiteren Ausführungsformen des Verfahrens werden die Antennen der mindestens einen ersten Station in einer Linie mit konstantem Abstand angeordnet.

Die lineare Anordnung der Antennen mit konstantem Abstand erlaubt eine einfache und effiziente Bestimmung des mindestens einen Lagewinkels.

Bei weiteren Ausführungsformen des Verfahrens wird ein Dauerstrichradar-Signal als das Ortungssignal verwendet.

Dauerstrichradar-Signale oder FMCW-Signale (FMCW; Frequency Modulated Continuous Wave) ermöglichen besonders genaue Messungen.

Bei weiteren Ausführungsformen des Verfahrens wird eine Frequenzrampe als das Ortungssignal verwendet.

Die Verwendung einer Frequenzrampe als das Ortungssignal kann insbesondere bei sequentieller Aussendung von Ortungssignalen vorteilhaft sein, zum Beispiel für den Fall, dass die erste Station mehrere Antennen aufweist oder das mehrere erste Stationen Ortungssignale senden.

Bei weiteren Ausführungsformen des Verfahrens sind die von der mindestens einen ersten Station empfangenen modulierten reflektierten Ortungssignale sowie die von der mindestens einen zweiten Station gesendeten modulierten reflektierten Ortungssignale kohärent. Der mindestens eine Lagewinkel wird aus den Phasenbeziehungen der gesendeten modulierten reflektierten Ortungssignale und der empfangenen modulierten reflektierten Ortungssignale berechnet.

Bei weiteren Ausführungsformen des Verfahrens sendet die mindestens eine erste Station zur Synchronisierung der mindestens einen ersten Station mit der mindestens einen zweiten Station ein separates Synchronisierungssignal.

Dies ermöglicht eine Synchronisierung mit der zweiten Station beispielsweise für den Fall, dass die erste Station mehrere Antennen hat und mehrere sequentiell mehrere Ortungssignale sendet, oder dass mehrere erste Stationen sequentiell mehrere Ortungssignale senden.

Bei weiteren Ausführungsformen des Verfahrens werden Signallaufzeiten der Ortungssignale zur Abstandmessung zwischen den Stationen verwendet.

Weiterhin wird eine Anordnung zur Ermittlung der relativen Lage von Stationen mittels Funkortung vorgeschlagen. Mindestens eine erste Station weist mindestens eine erste Antenne auf, und mindestens eine zweite Station weist mindestens zwei fußpunktmodulierte Antennen auf. Die erste Station ist ausgestaltet, mindestens ein Ortungssignal über die erste Antenne auszusenden. Die zweite Station ist ausgestaltet, das Ortungssignal über die erste fußpunktmodulierte Antenne als ein erstes moduliertes reflektiertes Ortungssignal und über die zweite fußpunktmodulierte Antenne als ein zweites moduliertes reflektiertes Ortungssignal moduliert zu reflektieren. Die erste Station ist weiterhin ausgestaltet, die modulierten reflektierten Ortungssignale über die Antenne zu empfangen und aus den Phasenbeziehungen der modulierten reflektierten Ortungssignale mindestens einen Lagewinkel für die relative Lage zwischen der ersten Station und der zweiten Station zu ermitteln.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Dabei zeigen:
- Fig. 1: ein Ausführungsbeispiel für eine Winkel- und Abstandsmessung zwischen zwei Stationen mittels Funkortung;
- Fig. 2: ein Ausführungsbeispiel einer Anordnung zur relativen Lageerkennung von Stationen mittels Funkortung;
- Fig. 3: ein weiteres Ausführungsbeispiel einer Anordnung zur relativen Lageerkennung von Stationen mittels Funkortung;
- Fig. 4: ein weiteres Ausführungsbeispiel einer Anordnung zur relativen Lageerkennung von Stationen mittels Funkortung; und
- Fig. 5: ein Blockdiagramm eines Verfahrens zur relativen Lageerkennung von Stationen mittels Funkortung.

In den Figuren sind gleiche oder funktionsgleiche Elemente mit denselben Bezugszeichen versehen worden, sofern nichts anderes angegeben ist.

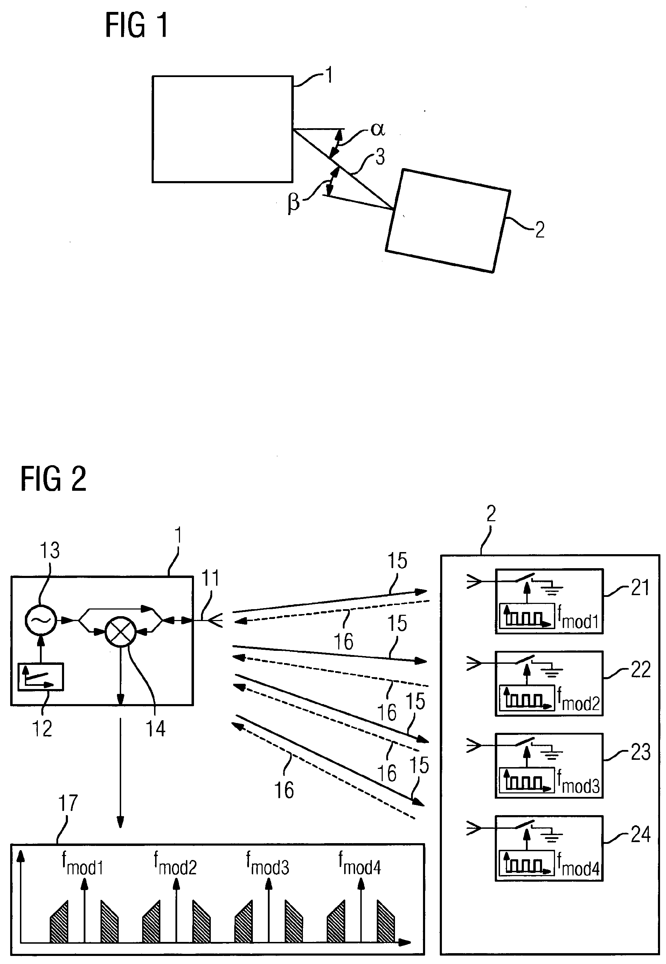

Fig. 1 zeigt ein Ausführungsbeispiel für eine Winkel- und Abstandsmessung zwischen zwei Stationen 1, 2 mittels Funkortung. Dargestellt ist die Lage zweier Stationen 1, 2 zueinander. Relativ zu einer Sichtlinie 3 sind die Lagewinkel α, β angegeben. Für den Fall, dass die erste Station genau eine Antenne aufweist, lässt sich der Lagewinkel β bestimmen. Für den Fall, dass die erste Station zwei oder mehr Antennen aufweist, lassen sich beide Lagewinkel α, β bestimmen.

Fig. 2 zeigt ein Ausführungsbeispiel einer Anordnung zur relativen Lageerkennung der Stationen 1, 2 mittels Funkortung. Dargestellt ist eine erste Station 1 mit einer Antenne 11. Symbolhaft sind für die erste Station 1 weiterhin ein Schalter 12, eine Wechselstromversorgung 13 und eine Auswerteeinheit 14 dargestellt, so dass die erste Station 1 eine vollwertige, aktive Sende- und Empfangsstation mit eigener Energieversorgung 13 und komplexer Hardwareausstattung darstellt.

Weiterhin ist eine zweite Station 2 dargestellt. Die zweite Station 2 weist vier fußpunktmodulierte Antennen 21, 22, 23, 24 auf.

Die erste Station 1 sendet ein Ortungssignal 15 über die Antenne 11. Die zweite Station 2 reflektiert das Ortungssignal 15 über die fußpunktmodulierten Antennen 21, 22, 23, 24 als modulierte reflektierte Ortungssignale 16. Jede der fußpunktmodulierten Antennen 21, 22, 23, 24 weist dabei einen Modulator, beispielsweise in Form eines Ein-/Ausschalters, auf, der das empfangene Ortungssignal 15 am Fußpunkt der Antenne entsprechend einer Modulation f_{mod1}, f_{mod2}, f_{mod3}, f_{mod4} moduliert, so dass die modulierten reflektierten Ortungssignale 16 beim Empfang an der ersten Station 1 eindeutig den einzelnen fußpunktmodulierten Antennen 21, 22, 23, 24 der zweiten Station 2 zuordenbar sind.

Die zweite Station 2 beziehungsweise die fußpunktmodulierten Antennen 21, 22, 23, 24 der zweiten Station können beispielsweise als passive RFID-Transponder ausgestaltet sein, die Energie aus dem Ortungssignal 15 beziehen.

Die erste Station 1 empfängt die modulierten reflektierten Ortungssignale 16 über die Antenne 11. In der Auswerteeinheit 14 wird aus den Phasenbeziehungen der empfangenen modulierten reflektierten Ortungssignale 16 mindestens ein Lagewinkel α, β für die relative Lage zwischen der ersten Station 1 und der zweiten Station 2 ermittelt.

Die Auswerteeinheit 14 umfasst beispielsweise einen Synthesizer, der das Ortungssignal 15 über die Antenne 11 als ein frequenzmoduliertes Dauerstrichsignal aussendet. Weiterhin umfasst die Auswerteeinheit 14 einen Mischer, der das ausgesendete Ortungssignal 15 mit den über die Antenne 11 empfangenen modulierten reflektierten Ortungssignalen 16 mischt. Die durch die fußpunktmodulierten Antennen 21, 22, 23, 24 modulierten reflektierten Ortungssignale 16 erzeugen in der Ausleseeinheit 14 ein Mischsignal mit Frequenzanteilen 17 im Bereich der jeweiligen Modulationsfrequenz f_{mod1}, f_{mod2}, f_{mod3,} f_{mod4} der fußpunktmodulierten Antennen 21, 22, 23, 24.

Diese Frequenzanteile 17 enthalten Informationen über die Entfernung zwischen der ersten Station 1 und der zweiten Station 2, die mit geeigneter Signalverarbeitung der Auswerteeinheit 14 ermittelt wird. Weiterhin ist in dem Mischsignal eine Information über die
Laufzeitphase der Ortungssignale 15 beziehungsweise der modulierten reflektierten Ortungssignale 16 zwischen der ersten Station 1 und der zweiten Station 2 enthalten.

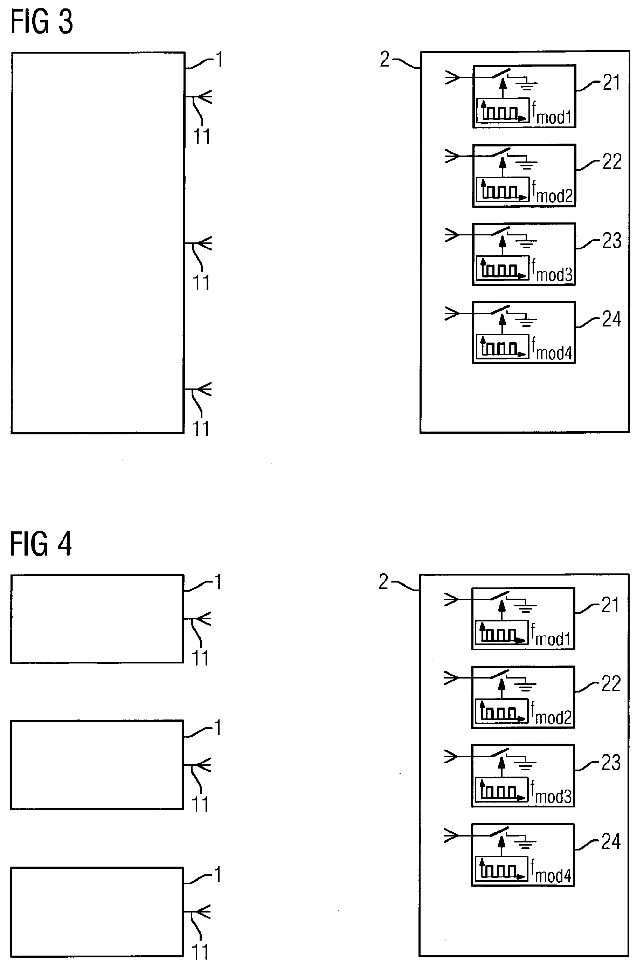

Fig. 3 zeigt ein weiteres Ausführungsbeispiel einer Anordnung zur relativen Lageerkennung der Stationen 1, 2 mittels Funkortung.

In diesem Ausführungsbeispiel umfasst die Anordnung eine erste Station 1 mit drei Antennen 11. Der Übersicht halber sind der Schalter 12, die Wechselstromversorgung 13 und die Auswerteeinheit 14 für die erste Station 1 in Fig. 3 nicht dargestellt.

Die zweite Station 2 weist wiederum vier fußpunktmodulierte Antennen 21, 22, 23, 24 auf.

Die erste Station 1 sendet über jede der drei Antennen 11 unter Verwendung unterschiedlicher Frequenzen beziehungsweise Kanäle oder mit unterschiedlichen Modulationen.

Wie in Fig. 4 dargestellt, ist es alternativ auch möglich, mehrere erste Stationen 1 mit jeweils einer oder mehreren Antennen 11 zur Aussendung des Ortungssignals 15 zu verwenden.

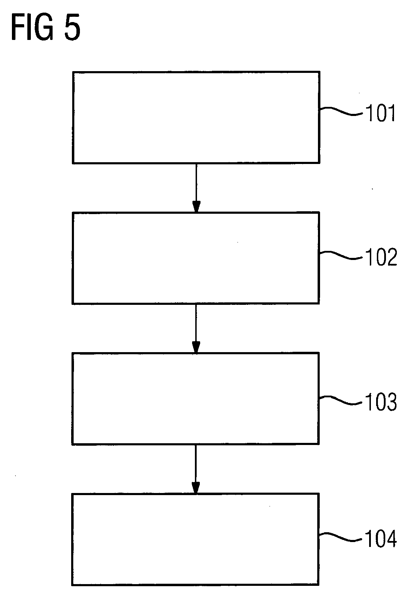

Fig. 5 zeigt ein Blockdiagramm eines Verfahrens zur relativen Lageerkennung der Stationen 1, 2 mittels Funkortung.

In Schritt 101 sendet die erste Station 1 ein Ortungssignal 15 über die erste Antenne 11. In Schritt 102 reflektiert die zweite Station 2 das Ortungssignal 15 über die fußpunktmodulierten Antennen 21-24 als modulierte reflektierte Ortungssignale 16. In Schritt 103 empfängt die erste Station 1 die modulierten reflektierten Ortungssignale 16 über die Antenne 11. In Schritt 104 wird aus den Phasenbeziehungen der empfangenen modulierten reflektierten Ortungssignale 16 mindestens ein Lagewinkel α, β für die relative Lage zwischen der ersten Station 1 und der zweiten Station 2 ermittelt.

Das vorgeschlagene Verfahren und die vorgeschlagene Anordnung zur relativen Lageerkennung von Stationen mittels Funkortung ermöglichen es, gleichzeitig eine ganze Reihe von fußpunktmodulierten Antennen abfragen zu können und die Phasenbeziehungen zwischen den fußpunktmodulierten Antennen auswerten zu können, um beispielsweise eine Winkelmessung durchzuführen.

Dazu wird vorzugsweise ausgenutzt, dass bei einer linearen Anordnung der fußpunktmodulierten Antennen die Phasenbeziehungen der von ihnen erzeugten Antwortsignale, das heißt der modulierten reflektierten Ortungssignale, ebenfalls einem linearen Zusammenhang folgen und sich daraus auf den Winkel der zweiten Station relativ zur Ausleseeinheit, das heißt zur ersten Station zurückschließen lässt.

Benutzt man mehrere oder mehrkanalige Ausleseeinheiten oder erste Stationen in linearer Anordnung, so unterscheiden sich die unterschiedlichen modulierten reflektierten Empfangssignale einer gegebenen fußpunktmodulierten Antenne ebenfalls und lassen somit Rückschlüsse auf den Winkel der Ausleseeinheiten beziehungsweise der ersten Stationen zur gegebenen fußpunktmodulierten Antenne der jeweiligen zweiten Station zu.

Eine weitere vorteilhafte Eigenschaft der vorgeschlagenen Anordnung mit mehreren Ausleseeinheiten oder ersten Stationen und mehreren fußpunktmodulierten Antennen einer zweiten Station ist die potentielle Erhöhung der Reichweite und der Robustheit durch eine geeignete Verrechnung der Signale. Dies wird insbesondere-ermöglicht durch die Kenntnis der Laufzeitphasen, die es beispielsweise ermöglicht, bestimmte Verfahren der digitalen Strahlsteuerung anzuwenden. Dadurch können beispielsweise Mehrwegeeffekte ausgeblendet werden, so dass die Messgenauigkeit erhöht werden kann.

Weiterhin kann durch eine phasenrichtige Überlagerung der insgesamt n*m Einzelsignale (mit n: Anzahl Auslesekanäle oder Ortungssignale und m: Anzahl fußpunktmodulierter Antennen) eine Steigerung des Signal-zu-Rausch-Abstandes erreicht werden, der die Reichweite entsprechender Systeme deutlich erweitern kann.

Das vorgeschlagene Verfahren und die vorgeschlagene Anordnung ermöglichen stark asymmetrische Systeme, die einen Großteil der Funktionalität mit Blick auf Hardware und Algorithmik im Ausleseteil, das heißt in der ersten Station konzentrieren.

Die zweite Station, die die fußpunktmodulierten Antennen beinhaltet, kann hingegen sehr einfach und kostengünstig aufgebaut sein, beispielsweise unter Verwendung von RFID-Tags. Dadurch ist das vorgeschlagene Systemkonzept für eine Vielzahl von Anwendungen anwendbar.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Ermittlung der relativen Lage von Stationen (1, 2) mittels Funkortung, wobei mindestens eine erste Station (1) mindestens eine erste Antenne (11) aufweist und mindestens eine zweite Station (2) mindestens zwei fußpunktmodulierte Antennen (21, 22, 23, 24) aufweist, wobei
die erste Station (1) mindestens ein Ortungssignal (15) über die erste Antenne (11) sendet (101);
die zweite Station (2) das Ortungssignal (15) über eine erste fußpunktmodulierte Antenne (21) als ein erstes moduliertes reflektiertes Ortungssignal (16) und über eine zweite fußpunktmodulierte Antenne (22) als ein zweites moduliertes reflektiertes Ortungssignal (16) moduliert reflektiert (102);
die erste Station (1) die modulierten reflektierten Ortungssignale (16) über die Antenne (11) empfängt (103); und
aus den Phasenbeziehungen der empfangenen modulierten reflektierten Ortungssignale (16) mindestens ein Lagewinkel (α, β) für die relative Lage zwischen der ersten Station (1) und der zweiten Station (2) ermittelt (104) wird.

2. Verfahren nach Anspruch 1,
**dadurch gekennzeichnet,**
**dass** die fußpunktmodulierten Antennen (21, 22, 23, 24) unterschiedliche Modulationen (f_{mod1}, f_{mod2}, f_{mod3}, f_{mod4}) des Ortungssignals (15) reflektieren.

3. Verfahren nach Anspruch 1 oder 2,
wobei die erste Station (1) eine zweite Antenne (11) aufweist, und wobei die erste Station (1) das Ortungssignal (15) über die erste und über die zweite Antenne (11) mit unterschiedlichen Frequenzen oder mit unterschiedlichen Modulationen, insbesondere mit orthogonalen Signalen, sendet.

4. Verfahren nach einem der Ansprüche 1-3,
**dadurch gekennzeichnet,**
**dass** die zweite Station (2) als ein Backscatter-Modul zur modulierten Rückstreuung des Ortungssignals (15) ausgestaltet wird.

5. Verfahren nach Anspruch 4,
**dadurch gekennzeichnet,**
**dass** die zweite Station (2) als ein passiver RFID-Transponder ausgestaltet wird.

6. Verfahren nach einem der Ansprüche 1-5,
**dadurch gekennzeichnet,**
**dass** die fußpunktmodulierten Antennen (21, 22, 23, 24) der mindestens einen zweiten Station (2) in einer Linie mit konstantem Abstand angeordnet werden.

7. Verfahren nach einem der Ansprüche 1-6,
**dadurch gekennzeichnet,**
**dass** die Antennen (11) der mindestens einen ersten Station (1) in einer Linie mit konstantem Abstand angeordnet werden.

8. Verfahren nach einem der Ansprüche 1-7,
**dadurch gekennzeichnet,**
**dass** als das Ortungssignal (15) ein Dauerstrichradar-Signal verwendet wird.

9. Verfahren nach einem der Ansprüche 1-7,
**dadurch gekennzeichnet,**
**dass** als das Ortungssignal (15) eine Frequenzrampe verwendet wird.

10. Verfahren nach einem der Ansprüche 1-9,
**dadurch gekennzeichnet,**
**dass** die von der mindestens einen ersten Station (1) empfangenen modulierten reflektierten Ortungssignale (16) sowie die von der mindestens einen zweiten Station (2) gesendeten modulierten reflektierten Ortungssignale (16) kohärent sind, wobei der mindestens eine Lagewinkel (α, β) aus den Phasenbeziehungen der gesendeten modulierten reflektierten Ortungssignale (16) und der empfangenen modulierten reflektierten Ortungssignale (16) berechnet wird.

11. Verfahren nach einem der Ansprüche 1-10,
**dadurch gekennzeichnet,**
**dass** zur Synchronisierung der mindestens einen ersten Station (1) mit der mindestens einen zweiten Station (2) die mindestens eine erste Station (1) ein separates Synchronisierungssignal sendet.

12. Verfahren nach einem der Ansprüche 1-11,
**dadurch gekennzeichnet,**
**dass** Signallaufzeiten der Ortungssignale zur Abstandmessung zwischen den Stationen (1, 2) verwendet werden.

13. Anordnung zur Ermittlung der relativen Lage von Stationen (1, 2) mittels Funkortung, wobei mindestens eine erste Station (1) mindestens eine erste Antenne (11) aufweist und mindestens eine zweite Station (2) mindestens zwei fußpunktmodulierte Antennen (21, 22, 23, 24) aufweist, wobei
die erste Station (1) ausgestaltet ist, mindestens ein Ortungssignal (15) über die erste Antenne (11) auszusenden (101) ;
die zweite Station (2) ausgestaltet ist, das Ortungssignal (15) über die erste fußpunktmodulierte Antenne (21,) als ein erstes moduliertes reflektiertes Ortungssignal (16) und über die zweite fußpunktmodulierte Antenne (22) als ein zweites moduliertes reflektiertes Ortungssignal (16) moduliert zu reflektieren (102);
die erste Station (101) weiterhin ausgestaltet ist, die modulierten reflektierten Ortungssignale (16) über die Antenne (11) zu empfangen (103) und aus den Phasenbeziehungen der modulierten reflektierten Ortungssignale (16) mindestens einen Lagewinkel (α, β) für die relative Lage zwischen der ersten Station (1) und der zweiten Station (2) zu ermitteln (104).

## Claims

1. Method for ascertaining the relative position of stations (1, 2) by means of radio location, wherein at least one first station (1) has at least one first antenna (11) and at least one second station (2) has at least two base-modulated antennas (21, 22, 23, 24), wherein
the first station (1) sends (101) at least one locating signal (15) via the first antenna (11);
the second station (2) reflects (102) the locating signal (15) in modulated form as a first modulated reflected locating signal (16) via a first base-modulated antenna (21) and as a second modulated reflected locating signal (16) via a second base-modulated antenna (22);
the first station (1) receives (103) the modulated reflected locating signals (16) via the antenna (11); and
the phase relationships of the received modulated reflected locating signals (16) are used to ascertain (104) at least one position angle (α, β) for the relative position between the first station (1) and the second station (2).

2. Method according to Claim 1,
**characterized**
**in that** the base-modulated antennas (21, 22, 23, 24) reflect different modulations (f_{mod1}, f_{mod2}, f_{mod3}, f_{mod4}) of the locating signal (15).

3. Method according to Claim 1 or 2,
wherein the first station (1) has a second antenna (11), and wherein the first station (1) sends the locating signal (15) via the first and via the second antenna (11) at different frequencies or with different modulations, particularly using orthogonal signals.

4. Method according to one of Claims 1-3,
**characterized**
**in that** the second station (2) is designed as a backscatter module for modulated backscatter of the locating signal (15).

5. Method according to Claim 4,
**characterized**
**in that** the second station (2) is designed as a passive RFID transponder.

6. Method according to one of Claims 1-5,
**characterized**
**in that** the base-modulated antennas (21, 22, 23, 24) of the at least one second station (2) are arranged in a line at constant intervals.

7. Method according to one of Claims 1-6,
**characterized**
**in that** the antennas (11) of the at least one first station (1) are arranged in a line at constant intervals.

8. Method according to one of Claims 1-7,
**characterized**
**in that** the locating signal (15) used is a continuous-wave radar signal.

9. Method according to one of Claims 1-7,
**characterized**
**in that** the locating signal (15) used is a frequency ramp.

10. Method according to one of Claims 1-9,
**characterized**
**in that** the modulated reflected locating signals (16) received by the at least one first station (1) and the modulated reflected locating signals (16) sent by the at least one second station (2) are coherent, wherein the at least one position angle (α, β) is calculated from the phase relationships of the sent modulated reflected locating signals (16) and the received modulated reflected locating signals (16).

11. Method according to one of Claims 1-10,
**characterized**
**in that** for the purpose of synchronizing the at least one first station (1) to the at least one second station (2) the at least one first station (1) sends a separate synchronization signal.

12. Method according to one of Claims 1-11,
**characterized**
**in that** signal propagation times of the locating signals are used to measure the interval between the stations (1, 2).

13. Arrangement for ascertaining the relative position of stations (1, 2) by means of radio location, wherein at least one first station (1) has at least one first antenna (11) and at least one second station (2) has at least two base-modulated antennas (21, 22, 23, 24), wherein
the first station (1) is designed to send (101) at least one locating signal (15) via the first antenna (11);
the second station (2) is designed to reflect (102) the locating signal (15) in modulated form as a first modulated reflected locating signal (16) via the first base-modulated antenna (21) and as a second modulated reflected locating signal (16) via the second base-modulated antenna (22);
the first station (101) is additionally designed to receive (103) the modulated reflected locating signals (16) via the antenna (11) and to use the phase relationships of the modulated reflected locating signals (16) to ascertain (104) at least one position angle (α, β) for the relative position between the first station (1) and the second station (2).

## Revendications

1. Procédé de détermination de la position relative de stations (1, 2) au moyen d'une localisation radio, dans lequel au moins une première station (1) présente au moins une première antenne (11) et au moins une deuxième station (2) présente au moins deux antennes modulées à la base (21, 22, 23, 24), dans lequel
la première station (1) envoie (101) au moins un signal de localisation (15) par l'intermédiaire de la première antenne (11) ;
la deuxième station (2) réfléchit (102) de manière modulée le signal de localisation (15) par l'intermédiaire d'une première antenne modulée à la base (21) en tant que premier signal de localisation (16) modulé réfléchi et par l'intermédiaire d'une deuxième antenne modulée à la base (22) en tant que deuxième signal de localisation (16) modulé réfléchi ;
la première station (1) reçoit (103) les signaux de localisation (16) modulés réfléchis par l'intermédiaire de l'antenne (11) ; et
au moins un angle de position (α, β) pour la position relative entre la première station (1) et la deuxième station (2) est déterminé (104) à partir des rapports de phase des signaux de localisation (16) modulés réfléchis reçus.

2. Procédé selon la revendication 1,
**caractérisé en ce que**,
les antennes modulées à la base (21, 22, 23, 24) reflètent différentes modulations (f_{mod1}, f_{mod2}, f_{mod3}, f_{mod4}) du signal de localisation (15).

3. Procédé selon la revendication 1 ou 2,
dans lequel la première station (1) présente une deuxième antenne (11), et dans lequel la première station (1) envoie le signal de localisation (15) par l'intermédiaire de la première antenne et par l'intermédiaire de la deuxième antenne (11) avec des fréquences différentes ou avec des modulations différentes, en particulier avec des signaux orthogonaux.

4. Procédé selon l'une quelconque des revendications 1 à 3,
**caractérisé en ce que**,
la deuxième station (2) est conçue en tant que module Backscatter destiné à une rétrodiffusion modulée du signal de localisation (15).

5. Procédé selon la revendication 4,
**caractérisé en ce que**,
la deuxième station (2) est conçue en tant que transpondeur RFID passif.

6. Procédé selon l'une quelconque des revendications 1 à 5,
**caractérisé en ce que**,
les antennes modulées à la base (21, 22, 23, 24) de la au moins une deuxième station (2) sont agencées sur une ligne avec un intervalle constant.

7. Procédé selon l'une quelconque des revendications 1 à 6,
**caractérisé en ce que**,
les antennes (11) de la au moins une première station (1) sont agencées sur une ligne avec un intervalle constant.

8. Procédé selon l'une quelconque des revendications 1 à 7,
**caractérisé en ce que**,
un signal radar à émission continue est utilisé en tant que signal de localisation (15).

9. Procédé selon l'une quelconque des revendications 1 à 7,
**caractérisé en ce que**,
une rampe de fréquence est utilisée en tant que signal de localisation (15).

10. Procédé selon l'une quelconque des revendications 1 à 9,
**caractérisé en ce que**,
les signaux de localisation (16) réfléchis modulés reçus par la au moins une première station (1) ainsi que les signaux de localisation (16) modulés réfléchis envoyés par la au moins une deuxième station (2) sont cohérents, le au moins un angle de position (α, β) étant calculé à partir des rapports de phase des signaux de localisation (16) modulés réfléchis envoyés et des signaux de localisation (16) modulés réfléchis reçus.

11. Procédé selon l'une quelconque des revendications 1 à 10,
**caractérisé en ce que**,
la au moins une première station (1) émet un signal de synchronisation séparé destiné à une synchronisation de la au moins une première station (1) avec la au moins une deuxième station (2).

12. Procédé selon l'une quelconque des revendications 1 à 11,
**caractérisé en ce que**,
des retards de signal des signaux de localisation sont utilisés pour une mesure d'intervalle entre les stations (1, 2).

13. Agencement pour une détermination de la position relative de stations (1, 2) au moyen d'une localisation radio, dans lequel au moins une première station (1) présente au moins une première antenne (11) et au moins une deuxième station (2) présente au moins deux antennes modulées à la base (21, 22, 23, 24), dans lequel
la première station (1) est conçue pour émettre (101) au moins un signal de localisation (15) par l'intermédiaire de la première antenne (11) ;
la deuxième station (2) est conçue pour réfléchir (102) de manière modulée le signal de localisation (15) par l'intermédiaire de la première antenne modulée à la base (21) en tant que premier signal de localisation (16) modulé réfléchi et par l'intermédiaire de la deuxième antenne modulée à la base (22) en tant que deuxième signal de localisation (16) modulé réfléchi ;
la première station (101) est en outre conçue pour recevoir (103), par l'intermédiaire de l'antenne (11), les signaux de localisation (16) modulés réfléchis et pour déterminer (104) au moins un angle de position (α, β) pour la position relative entre la première station (1) et la deuxième station (2) à partir des rapports de phase des signaux de localisation (16) modulés réfléchis.
